# EUROPÄISCHE PATENTANMELDUNG

(11) **EP 4 056 422 A1**
(43) Veröffentlichungstag der Anmeldung: **14.09.2022**
(21) Anmeldenummer: 22171311.8
(22) Anmeldetag: 06.12.2019
(51) Int. Cl.: B60P 7/13

(54) **CONTAINERVERRIEGELUNG, FRONTAUSSCHUB EINES FAHRGESTELLS MIT EINER SOLCHEN CONTAINERVERRIEGELUNG UND VERRIEGELUNGSANORDNUNG**

(30) Priorität: 14.12.2018 DE 202018107146 U
(62) Teilanmeldung aus: 19214020.0
(71) Anmelder: Kögel Trailer GmbH, 89349 Burtenbach (DE)
(72) Erfinder: MÜLLER, Michael, 86470 Thannhausen (DE)
(74) Vertreter: Kilchert, Jochen

(57) **Zusammenfassung**

Die Erfindung betriff eine Containerverriegelung (1) zur Verriegelung verschiedener Containertypen auf einem Fahrgestell (100), insbesondere für einen Frontausschub (3) des Fahrgestells (100), umfassend einen ersten Verriegelungsmechanismus (10), der dazu ausgebildet ist, ein erstes Verriegelungselement (11) entlang einer horizontalen Verriegelungsachse (H) zwischen einer Öffnungsstellung und einer Verriegelungsstellung hin- und herzubewegen, sowie einen zweiten Verriegelungsmechanismus (20), der dazu ausgebildet ist, ein zweites Verriegelungselement (21) um eine vertikale Verriegelungsachse (V) zwischen einer Öffnungsstellung und einer Verriegelungsstellung hin- und herzubewegen, wobei der erste Verriegelungsmechanismus (10) und der zweite Verriegelungsmechanismus (20) unabhängig voneinander betätigbar sind.

## Beschreibung

Die Erfindung betrifft eine Containerverriegelung zur Verriegelung verschiedener Containertypen auf einem Fahrgestell, sowie einen Frontausschub eines Fahrgestells, insbesondere eines Sattelaufliegers, zur Aufnahme verschiedener Containertypen.

Aus dem Stand der Technik sind Verriegelungsvorrichtungen für Container (Seefracht-Container) auf Fahrgestellen bzw. Containerchassis von Trägerfahrzeugen bekannt, die zur sicheren Befestigung der Container während des Transports eingesetzt werden. Solche Verriegelungsvorrichtungen werden typischerweise für von einer Sattelzugmaschine gezogene Sattelauflieger eingesetzt.

Die Abmessungen solcher Container sind genormt (ISO 668 und ISO 1496), wobei verschiedene Containertypen üblich sind. Als Containerlängen sind 20 Fuß, 40 Fuß, 45 Fuß und 53 Fuß verbreitet. Neben Standardcontainern (ISO-Container) sind auch höhere sog. High-Cube-(HC) Container üblich. Die Container weisen an ihrer Unterseite genormte Eckbeschläge auf, die mit Steck- oder Drehzapfen der Verriegelungsvorrichtungen zusammenwirken, um eine lösbare formschlüssige Verriegelung herzustellen. Für ISO-Container wird üblicherweise eine vertikale Verriegelung mit Drehzapfen (sog. Twistlock) verwendet, während für *High-Cube-Container* eine horizontale Verriegelung mit Steckzapfen eingesetzt wird. Die vertikale und horizontale Verriegelung sind häufig mechanisch miteinander gekoppelt.

Container der Länge 40 Fuß weisen typischerweise frontseitige Eckbeschläge mit in Verriegelungsrichtung (Längsachse des Fahrzeuggestells) ausgerichteten Aufnahmeöffnungen auf. Solche in Verriegelungsrichtung ausgerichtete Aufnahmeöffnungen sind bei Eckbeschlägen für Container der Länge 45 Fuß typischerweise nach innen versetzt, während zusätzliche äußere Aufnahmeöffnungen vorgesehen sind, die schräg (nach außen zeigend) zur Verriegelungsrichtung ausgerichtet sind. Es ist bekannt, die horizontale Verriegelung relativ zur vertikalen Verriegelung nach innen zu verschieben, um einen 45-Fuß-Container an den inneren Aufnahmeöffnungen verriegeln zu können, während ein 40-Fuß-Container an weiter außen liegenden Aufnahmeöffnungen verriegelt wird.

Um ein Containerchassis mit verschiedenen Containertypen beladen zu können, sind häufig Ausschübe vorgesehen, wie beispielsweise ein Frontausschub, Mittelausschub oder Heckausschub, die je nach Containerlänge aus- bzw. einfahrbar sind. Grundsätzlich wird aus Gründen der Fahrdynamik eine möglichst tiefe Auflageposition des Containers auf dem Fahrgestell angestrebt. Typischerweise ist die Auflageposition im Frontbereich des Containerchassis höher als im Heckbereich, sodass der Höhenunterschied im Heckbereich je nach Containertyp gegebenenfalls ausgeglichen werden muss.

Aus der DE 10 2014 218 891 A1 ist eine Verriegelungsvorrichtung für Container an einem Fahrzeugchassis bekannt, bei der ein Drehzapfen und ein Steckzapfen in einem Gehäuse der Verriegelungsvorrichtung miteinander zwangsgekoppelt sind.

Solche Containerverriegelungen aus dem Stand der Technik weisen eine Vielzahl von Bauteilen auf, um komplexe Verstellmechanismen umzusetzen. Damit einher gehen eine relativ komplizierte Bedienung, hohe Herstellungskosten und eine große Baugröße bzw. ein hoher Platzbedarf der Verriegelung. Außerdem sind komplexe Containerverriegelungen verschleißanfällig, insbesondere mit zunehmender Lebensdauer oder bei ungünstiger Witterung, z.B. im Winter.

Ausgehend von diesem Stand der Technik hat die vorliegende Erfindung deshalb die Aufgabe, eine Containerverriegelung zur Verriegelung verschiedener Containertypen auf einem Fahrgestell sowie einen Frontausschub eines Fahrgestells zur Aufnahme verschiedener Containertypen bereitzustellen, die kostengünstig herstellbar und einfach zu bedienen sind. Außerdem soll die Containerverriegelung möglichst platzsparend sein.

Diese Aufgabe wird gelöst durch eine Containerverriegelung nach Anspruch 1, einen Frontausschub nach Anspruch 10 eine Verriegelungsanordnung nach Anspruch 15.

Insbesondere wird die genannte Aufgabe gelöst durch eine Containerverriegelung zur Verriegelung verschiedener Containertypen auf einem Fahrgestell, insbesondere für einen Frontausschub des Fahrgestells, umfassend
- einen ersten Verriegelungsmechanismus, der dazu ausgebildet ist, ein erstes Verriegelungselement entlang einer horizontalen Verriegelungsachse zwischen einer Öffnungsstellung und einer Verriegelungsstellung hin- und herzubewegen,
- einen zweiten Verriegelungsmechanismus, der dazu ausgebildet ist, ein zweites Verriegelungselement um eine vertikale Verriegelungsachse zwischen einer Öffnungsstellung und einer Verriegelungsstellung hin- und herzubewegen,
dadurch gekennzeichnet, dass der erste Verriegelungsmechanismus und der zweite Verriegelungsmechanismus unabhängig voneinander betätigbar sind.

Eine Idee der Erfindung ist es, den ersten und zweiten Verriegelungsmechanismus so auszubilden, dass jeder der beiden Verriegelungsmechanismen unabhängig (getrennt) von dem jeweils anderen Verriegelungsmechanismus (von einem Benutzer), vorzugsweise manuell, betätigbar ist. Insbesondere sind der erste und zweite Verriegelungsmechanismus mechanisch voneinander entkoppelt. Vorzugsweise weist die erfindungsgemäße Containerverriegelung nur die genannten Verstellmöglichkeiten des ersten und zweiten Verriegelungsmechanismus auf. Insbesondere kann bei Verwendung der erfindungsgemäßen Containerverriegelung für einen Frontausschub eines Fahrgestells auf seitliche Ausschübe (in Querrichtung des Fahrgestells) und/oder eine Höhenverstellbarkeit verzichtet werden.

Die erfindungsgemäße Containerverriegelung kann ein (separates) Verriegelungsgehäuse umfassen, dass insbesondere (seitlich) an einem Träger (Querträger) des Fahrgestells befestigtbar ist, wobei der erste und zweite Verriegelungsmechanismus in dem Verriegelungsgehäuse aufgenommen sein können. Bevorzugt ist die erfindungsgemäße Containerverriegelung aber in einen Träger (Querträger) des Fahrgestells, insbesondere in einen Frontauszug des Fahrgestells, integriert bzw. darin aufgenommen.

Die erfindungsgemäße Containerverriegelung kann gegenüber dem Stand der Technik einfacher aufgebaut sein, da insbesondere eine Kopplung des ersten mit dem zweiten Verriegelungsmechanismus, und umgekehrt, entfallen kann. Die Verriegelung kann weniger (bewegliche) Bauteile umfassen und dadurch insbesondere kostengünstiger hergestellt werden und einen geringeren Bauraum beanspruchen. Außerdem können der erste und der zweite Verriegelungsmechanismus räumlich getrennt voneinander angeordnet werden, wodurch eine platzsparende Anordnung gewählt werden kann. Zudem können die einzelnen Verriegelungsmechanismen jeweils einfach, insbesondere mit wenigen Bauteilen, umgesetzt werden. Insgesamt wird die Verschleißanfälligkeit reduziert und die Bedienung der Verriegelung durch unabhängige Verriegelungsmechanismen vereinfacht.

Unter verschiedenen Containertypen sind insbesondere Container mit verschiedenen Höhen zu verstehen. Die horizontale Verriegelungsachse verläuft insbesondere in Längsrichtung des Fahrgestells. Das Fahrgestell ist vorzugsweise ein Sattelauflieger. Das erste und zweite Verriegelungselement sind insbesondere zur Ausbildung einer (formschlüssigen) Verbindung mit einer Aufnahmeöffnung eines zugeordneten Containerbeschlags (Eckbeschlags) des zu verriegelnden Containers ausgebildet. Der zweite Verriegelungsmechanismus umfasst vorzugsweise einen Twistlock-Mechanismus bzw. ist als solcher ausgebildet.

In einer vorteilhaften Weiterbildung der Erfindung ist das erste Verriegelungselement über einen ersten Betätigungshebel (Zug-/Druckhebel bzw. -griff) entlang der horizontalen Verriegelungsachse axial verschieblich und/oder das zweite Verriegelungselement über einen zweiten Betätigungshebel (Schwenkhebel) um die vertikale Verriegelungsachse verdrehbar. Das erste Verriegelungselement ist vorzugsweise als ein Steckbolzen bzw. -zapfen ausgeführt. Das zweite Verriegelungselement weist vorzugsweise einen Verriegelungskopf auf, der mit einem Drehbolzen bzw. -zapfen (einteilig) verbunden ist.

In einer vorteilhaften Weiterbildung der Erfindung ist der erste Verriegelungsmechanismus oberhalb des zweiten Verriegelungsmechanismus angeordnet ist. Insbesondere liegen die horizontale Verriegelungsachse und die vertikale Verriegelungsachse zumindest im Wesentlichen in einer Ebene. Eine gemeinsame Ebene der horizontalen und vertikalen Verriegelungsachse ist insbesondere vertikal (in Richtung der Schwerkraft) und in Längsrichtung eines Fahrgestells ausgerichtet, und stimmt im verriegelten Zustand des Containers insbesondere mit einer (vertikalen) Mittelebene eines Containerbeschlags überein. Die horizontale und vertikale Verriegelungsachse können in geringfügig voneinander beabstandeten Ebenen liegen. Durch eine Anordnung des ersten und zweiten Verriegelungsmechanismus übereinander ist eine schmale Bauform der Containerverriegelung bzw. eines Frontausschubs möglich. Dadurch können insbesondere Probleme bezüglich des Durchschwenkradius vermieden werden. Durch eine unabhängige Betätigbarkeit (mechanische Entkopplung) der beiden übereinander angeordneten Verriegelungsmechanismen kann auf einen (vertikal) zwischengeordneten Kopplungsmechanismus verzichtet werden, wodurch eine relativ geringe Bauhöhe erhalten bleibt.

In einer vorteilhaften Weiterbildung der Erfindung umfasst der erste Verriegelungsmechanismus einen entlang der horizontalen Verriegelungsachse axial verschieblich gelagerten ersten Betätigungshebel, der mit dem ersten Verriegelungselement verbunden ist. Insbesondere sind der Betätigungshebel und das erste Verriegelungselement starr miteinander verbunden bzw. einteilig ausgeführt.

In einer vorteilhaften Weiterbildung der Erfindung umfasst der erste Verriegelungsmechanismus einen ersten Betätigungshebel, der in einer Axial-/Drehlagerung entlang der horizontalen Verriegelungsachse axial verschieblich und um die horizontale Verriegelungsachse verdrehbar gelagert ist, wobei das erste Verriegelungselement insbesondere einen in der Axial-/Drehlagerung aufgenommen Gleitlagerabschnitt aufweist. Der Gleitlagerabschnitt ist insbesondere ein frontseitiger Längsabschnitt des ersten Verriegelungselements (Bolzens) und hat vorzugsweise einen kreiszylindrischen Querschnitt. Der Betätigungshebel ist vorzugsweise um bis zu 45°, weiter vorzugsweise um bis zu 30°, besonders bevorzugt um ungefähr 20° verdrehbar.

In einer vorteilhaften Weiterbildung der Erfindung umfasst der erste Verriegelungsmechanismus eine Kulissenführung, wobei der erste Betätigungshebel einen Greifabschnitt mit einem endseitigen Führungselement aufweist, das in die Kulissenführung eingreift, wobei die Kulissenführung insbesondere einen zumindest im Wesentlichen parallel zur horizontalen Verriegelungsachse ausgerichteten horizontalen Führungsnutabschnitt aufweist. Die Kulissenführung ist insbesondere als eine, vorzugsweise parallel zur horizontalen Verriegelungsachse ausgerichtete, Platte mit einer Führungsnut ausgeführt. Eine Kulissenführung legt die möglichen Verstellbewegungen des ersten Verriegelungsmechanismus fest bzw. begrenzt diese.

In einer vorteilhaften Weiterbildung insbesondere dieses Aspekts der Erfindung umfasst der erste Verriegelungsmechanismus eine Kulissenführung, die einen ersten vertikalen Führungsnutabschnitt zur Festlegung der Öffnungsstellung des ersten Verriegelungselements und einen zweiten vertikalen Führungsnutabschnitt zur Festlegung der Verriegelungsstellung des ersten Verriegelungselements aufweist. Insbesondere sind der erste vertikale Führungsnutabschnitt und der zweite vertikale Führungsnutabschnitt in einer Richtung parallel zur horizontalen Verriegelungsachse voneinander beabstandet. Die beiden vertikalen Führungsnutabschnitte sind insbesondere über den horizontalen Führungsnutabschnitt miteinander verbunden, wobei der erste und zweite vertikale Führungsnutabschnitt beidseitig am Ende des horizontalen Führungsnutabschnitts (sich nach unten erstreckend) angeordnet sind. Insbesondere wird der erste Betätigungshebel bei einer Bewegung von einer Öffnungsposition in eine Verriegelungsposition (aus dem ersten vertikalen Führungsnutabschnitt) nach oben gehoben, dann (entlang des horizontalen Führungsnutabschnitts) nach vorne (in Frontrichtung) gezogen und anschließend (in den zweiten vertikalen Führungsnutabschnitt) nach unten abgelegt.

In einer vorteilhaften Weiterbildung der Erfindung umfasst der erste Verriegelungsmechanismus ein mit dem ersten Betätigungshebel gekoppeltes Federelement, das eine einer Verdrehbewegung des ersten Betätigungshebels entgegenwirkende Rückstellkraft, insbesondere in vertikale Richtung nach unten, auf den ersten Betätigungshebel ausübt. Dadurch wird eine unbeabsichtigte Bewegung des Betätigungshebels nach oben verhindert.

In einer vorteilhaften Weiterbildung der Erfindung umfasst der zweite Verriegelungsmechanismus einen um die vertikale Verriegelungsachse, vorzugsweise um zumindest ungefähr 90°, verdrehbaren zweiten Betätigungshebel, der mit dem zweiten Verriegelungselement verbunden ist, wobei der zweite Betätigungshebel insbesondere mit einem in einer Drehlagerung aufgenommenen Gleitlagerabschnitt des zweiten Verriegelungselements verbunden ist.

In einer vorteilhaften Weiterbildung der Erfindung umfasst der zweite Verriegelungsmechanismus ein mit dem zweiten Verriegelungselement gekoppeltes Federelement, insbesondere ein Drehfederelement, das insbesondere eine in eine Öffnungsstellung des zweiten Betätigungshebels wirkende Rückstellkraft auf den zweiten Betätigungshebel ausübt.

In einer vorteilhaften Weiterbildung der Erfindung sind der erste Verriegelungsmechanismus und der zweite Verriegelungsmechanismus relativ zueinander unverschieblich angeordnet, insbesondere fest miteinander verbunden, wobei der erste Verriegelungsmechanismus und der zweite Verriegelungsmechanismus insbesondere in einer Richtung, die senkrecht zur horizontalen Verriegelungsachse und zur vertikalen Verriegelungsachse verläuft, unverschieblich sind. Insbesondere sind der erste Verriegelungsmechanismus und der zweite Verriegelungsmechanismus fest in einem gemeinsamen Gehäuse, beispielsweise einem Querträger eines Frontausschubs, angeordnet. Insbesondere ist der erste Verriegelungsmechanismus nicht nach innen oder außen, bezogen auf die Mittelachse eines Fahrgestells, d.h. in Querrichtung des Fahrgestells, verschieblich. Durch den Verzicht auf eine mechanisch aufwändige Verschiebungsmöglichkeit, insbesondere des ersten Verriegelungsmechanismus, ist die Containerverriegelung konstruktiv einfacher und kostengünstiger ausführbar.

Die genannte Aufgabe wird außerdem insbesondere gelöst durch einen Frontausschub eines Fahrgestells, insbesondere eines Sattelaufliegers, zur Aufnahme verschiedener Containertypen, gekennzeichnet durch mindestens eine erfindungsgemäße Containerverriegelung. Vorzugsweise sind zwei erfindungsgemäße Containerverriegelungen vorgesehen, die jeweils an einem seitlichen Ende (eines Querträgers) des Frontausschubs angeordnet sind. Ein erfindungsgemäßer Frontausschub hat ähnliche Vorteile, wie sie bereits im Zusammenhang mit einer erfindungsgemäßen Containerverriegelung beschrieben wurden.

In einer vorteilhaften Weiterbildung der Erfindung ist die mindestens eine Containerverriegelung in einen Querträger des Frontausschubs integriert ist, wobei der erste Verriegelungsmechanismus und der zweite Verriegelungsmechanismus insbesondere im Wesentlichen innerhalb des Querträgers, vorzugsweise relativ zueinander unverschieblich, aufgenommen sind. Insbesondere ist kein Verschiebemechanismus (Verschiebungsmöglichkeit) des ersten Verriegelungsmechanismus, d.h. des ersten Verriegelungselements, in Längsrichtung des Querträgers, d.h. in Querrichtung des Fahrzeuggestells, nach innen (zur Mittelachse des Fahrzeuggestells hin), vorgesehen. Der Querträger weist insbesondere einen Obergurt, einen Untergurt und einen den Obergurt und den Untergurt verbindenden Stegabschnitt auf, die vorzugsweise aus Stahl gefertigt und miteinander verschweißt sind. Insbesondere sind der erste und zweite Verriegelungsmechanismus in dem Querträger gelagert. Der Querträger bildet insbesondere einen (inneren) Aufnahmeraum aus, in dem die Containerverriegelung angeordnet ist, wobei erste und/oder zweite Verriegelungselemente über den Querträger hinausragen können. Durch eine Integration der Containerverriegelung in den Querträger kann auf ein (separates) Verriegelungsgehäuse verzichtet werden, wodurch sich das Gewicht des Frontausschubs reduziert. Durch eine schmale Bauform, insbesondere bei Anordnung des ersten und zweiten Verriegelungsmechanismus übereinander, können Probleme mit bzgl. des Durchschwenkradius vermieden werden. Indem der erste und der zweite Verriegelungsmechanismus unverschieblich zueinander vorgesehen sind, kann der Frontausschub kostengünstiger, einfacher und mit geringerem Gewicht ausgeführt werden. Insbesondere kann bei einer bestimmten gesetzlich vorgeschriebenen Gesamtlänge des Sattelaufliegers, zum Beispiel von 12,15 m gemessen ab dem Königszapfen, ein Container, vorzugsweise ein 45-Fuß-High-Cube-Container, weiter hinten als im Stand der Technik üblich auf einem Sattelaufliegers verriegelt werden, so dass auf die Verschieblichkeit des ersten Verriegelungsmechanismus nach innen verzichtet werden kann, wobei der erforderliche Durchschwenkradius trotzdem eingehalten wird. Dafür ist der erste Verriegelungsmechanismus vorzugsweise so weit außen (in Querrichtung zum Fahrzeuggestell) in den Querträger integriert, dass ein erstes Verriegelungselement in eine äußere, insbesondere schräg zur horizontalen Verriegelungsrichtung ausgerichtete Aufnahmeöffnung eines Eckbeschlags eines Containers eingreift.

In einer vorteilhaften Weiterbildung der Erfindung weist der Querträger eine erste Durchgangsöffnung für das erste Verriegelungselement, vorzugsweise in einem rückseitigen Stegabschnitt des Querträgers, und/oder eine zweite Durchgangsöffnung für das zweite Verriegelungselement, vorzugsweise in einem Obergurt des Querträgers, auf. Die ersten und zweiten Verriegelungselemente sind insbesondere durch die zugehörigen Durchgangsöffnungen hindurchgeführt, und erstrecken sich insbesondere aus dem Querträger hinaus.

In einer vorteilhaften Weiterbildung der Erfindung ist zwischen einem Obergurt und einem Untergurt des Querträgers eine koaxial zur ersten Durchgangsöffnung ausgerichtete Axial-/Drehlagerung zur Aufnahme eines Gleitlagerabschnitts des ersten Verriegelungselements angeordnet.

In einer vorteilhaften Weiterbildung der Erfindung ist die Axial-/Drehlagerung durch einen, insbesondere mit einem rückseitigen Stegabschnitt des Querträgers verschweißten, Rohrabschnitt mit einer Längsausnehmung gebildet. Die Längsausnehmung weist insbesondere eine zur Durchführung und Verschränkung des ersten Betätigungshebels ausreichende Schlitzbreite auf. Eine solche Ausführung konstruktiv einfach und kostengünstig.

In einer vorteilhaft Weiterbildung der Erfindung ist zwischen einem Obergurt und einem Untergurt des Querträgers ein Verbindungsblech angeordnet, das eine, insbesondere an einer Oberseite, eine Führungskante zur Führung des zweiten Betätigungshebels aufweist, wobei die Führungskante insbesondere eine erste Vertiefung zur Festlegung der Öffnungsstellung des zweiten Verriegelungselements und eine zweite Vertiefung zur Festlegung der Verriegelungsstellung des zweiten Verriegelungselements ausbildet. Das Verbindungsblech ist vorzugsweise zwischen den Obergurt und den Untergurt eingeschweißt. Die Führungskante kann über Eck, vorzugsweise ungefähr um ungefähr 90° gebogen, verlaufen.

In einer vorteilhaften Weiterbildung dieses Aspekts der Erfindung weist das Verbindungsblech einen im Wesentlichen senkrecht zur horizontalen Verriegelungsachse angeordneten Blechabschnitt auf, der mit einem frontseitigen Endbereich des Rohrabschnitts verbunden, insbesondere verschweißt, ist. Dadurch ist die Axial-/Drehlagerung stabil und konstruktiv einfach ausführbar. Die Anzahl der erforderlichen (zu verschweißenden) Bauteile wird weiter reduziert.

In einer vorteilhaften Weiterbildung der Erfindung ist die Kulissenführung als eine Kulissenplatte mit einer Führungsnut ausgeführt, die insbesondere mit einem Längsstegabschnitt des Querträgers verbunden, insbesondere verschraubt, ist. Auf diese Weise ist der erste Betätigungshebel bzw. das erste Verriegelungselement, insbesondere in dem Querträger, einfach montierbar.

In einer vorteilhaften Weiterbildung insbesondere dieses Aspekts der Erfindung weist ein Längsstegabschnitt des Querträgers eine Stegausnehmung auf, in die ein Führungselement des ersten Betätigungshebels hineinragt. Auf diese Weise kann in bzw. hinter der Stegausnehmung ein Federelement zur Verbindung mit dem Führungselement angeordnet werden.

In einer vorteilhaften Weiterbildung insbesondere dieses Aspekts der Erfindung ist ein Federelement jeweils mit dem Querträger, insbesondere mit dem Untergurt des Querträgers, und dem Führungselement des ersten Betätigungshebels verbunden, insbesondere auf einer vom ersten Verriegelungselement abgewandten Seite der Kulissenführung.

In einer vorteilhaften Weiterbildung der Erfindung ist der erste Verriegelungsmechanismus derart innerhalb des Querträgers angeordnet, dass das erste Verriegelungselement im Verriegelungszustand in eine äußere, insbesondere schräg zur horizontalen Verriegelungsrichtung ausgerichtete, Aufnahmeöffnung eines Eckbeschlags eines Containers, insbesondere eines (HC) Containers der Länge 45 Fuß gemäß einer der Normen ISO 668 und/oder ISO 1496, eingreift. Durch eine Abschrägung der Außenkanten an der Frontseite des Containers bzw. dessen Eckbeschlägen kann im Stand der Technik bei einer bestimmten gesetzlich vorgeschriebenen Gesamtlänge eines Sattelaufliegers, z.B. 12 m gemessen ab dem Königszapfen, auch für die (im Vergleich zu 40-Fuß-Containers) längeren 45-Fuß-Container der erforderliche Durchschwenkradius eingehalten werden. Für eine längere gesetzlich vorgeschriebene Gesamtlänge, z.B. 12,15 m gemessen ab dem Königszapfen, kann ein Container weiter hinten auf einem Sattelaufliegers platziert werden, wobei mehr Platz für den Frontausschub verbleibt. Durch den erfindungsgemäßen Verzicht auf eine Verschiebungsmöglichkeit des ersten Verriegelungsmechanismus nach innen kann die Containerverriegelung konstruktiv einfach und kostengünstig hergestellt werden, wobei im Vergleich zum Stand der Technik der erste Verriegelungsmechanismus für die Verriegelung von High-Cube Containern, d.h. sowohl von 40-Fuß- als auch von 45-Fuß-Hig-Cube-Containern, (unverschieblich) außen angeordnet ist. Bei einer längeren gesetzlich vorgeschriebenen Gesamtlänge von vorzugsweise 12,15 m wird der erforderliche Durchschwenkradius, z.B. 2040 mm, trotzdem eingehalten, d.h. auch für die längeren 45-Fuß-Container.

Die genannte Aufgabe wird außerdem insbesondere gelöst durch ein Fahrgestell, insbesondere einen Sattelauflieger, zur Aufnahme verschiedener Containertypen, das bzw. der mindestens eine erfindungsgemäße Containerverriegelung oder einen erfindungsgemäßen Frontausschub aufweist. Die Containerverriegelung kann in einen Träger, insbesondere einen Querträger eines Frontausschubes, integriert bzw. aufgenommen sein.

Die genannte Aufgabe wird außerdem insbesondere gelöst durch eine Verriegelungsanordnung umfassend einen erfindungsgemäßen Frontausschub und einen Container, vorzugsweise 45-Fuß-Container (High-Cube-Container der Länge 45 Fuß), mit einem frontseitigen Eckbeschlag, der eine äußere, insbesondere schräg zur horizontalen Verriegelungsrichtung ausgerichtete, Aufnahmeöffnung aufweist, wobei das erste Verriegelungselement der Containerverriegelung in die Aufnahmeöffnung eingreift. Der Eckbeschlag des Containers weißt insbesondere zwei Aufnahmeöffnungen auf jeder Seite, nämlich eine innere und eine äußere Aufnahmeöffnung auf. Während die innere Aufnahmeöffnung (deren Öffnungsmittelachse) in Richtung der Verriegelungsrichtung (Längsachse des Fahrzeuggestells) ausgerichtet ist, ist die äußere Aufnahmeöffnung schräg (nach außen zeigend) zur Verriegelungsrichtung ausgerichtet. Erfindungsgemäß kann der Container an der äußeren, schrägen Aufnahmeöffnung verriegelt werden, wobei auf eine Verschiebungsmöglichkeit des ersten Verriegelungsmechanismus nach innen verzichtet werden kann.

Nachfolgend werden Aspekte der Erfindung beschrieben:
1. Containerverriegelung (1) zur Verriegelung verschiedener Containertypen auf einem Fahrgestell (100), insbesondere für einen Frontausschub (3) des Fahrgestells (100), umfassend
   - einen ersten Verriegelungsmechanismus (10), der dazu ausgebildet ist, ein erstes Verriegelungselement (11) entlang einer horizontalen Verriegelungsachse (H) zwischen einer Öffnungsstellung und einer Verriegelungsstellung hin- und herzubewegen,
   - einen zweiten Verriegelungsmechanismus (20), der dazu ausgebildet ist, ein zweites Verriegelungselement (21) um eine vertikale Verriegelungsachse (V) zwischen einer Öffnungsstellung und einer Verriegelungsstellung hin- und herzubewegen,
   **dadurch gekennzeichnet**, dass der erste Verriegelungsmechanismus (10) und der zweite Verriegelungsmechanismus (20) unabhängig voneinander betätigbar sind.
2. Containerverriegelung (1) nach Aspekt 1,
   **dadurch gekennzeichnet**, dass das erste Verriegelungselement (11) über einen ersten Betätigungshebel (13) entlang der horizontalen Verriegelungsachse (H) axial verschieblich ist und/oder das zweite Verriegelungselement (21) über einen zweiten Betätigungshebel (22) um die vertikale Verriegelungsachse (V) verdrehbar ist.
3. Containerverriegelung (1) nach Aspekt 1 oder 2,
   **dadurch gekennzeichnet**, dass der erste Verriegelungsmechanismus (10) oberhalb des zweiten Verriegelungsmechanismus (20) angeordnet ist, wobei insbesondere die horizontale Verriegelungsachse (H) und die vertikale Verriegelungsachse (V) zumindest im Wesentlichen in einer Ebene liegen.
4. Containerverriegelung (1) nach einem der vorherigen Aspekte,
   **dadurch gekennzeichnet**, dass der erste Verriegelungsmechanismus (10) einen entlang der horizontalen Verriegelungsachse (H) axial verschieblich gelagerten ersten Betätigungshebel (13) umfasst, der mit dem ersten Verriegelungselement (11) verbunden ist.
5. Containerverriegelung (1) nach einem der vorherigen Aspekte,
   **dadurch gekennzeichnet**, dass der erste Verriegelungsmechanismus (10) einen ersten Betätigungshebel (13) umfasst, der in einer Axial-/Drehlagerung (12) entlang der horizontalen Verriegelungsachse (H) axial verschieblich und um die horizontale Verriegelungsachse (H) verdrehbar gelagert ist, wobei das erste Verriegelungselement (11) insbesondere einen in der Axial-/Drehlagerung (12) aufgenommen Gleitlagerabschnitt (111) aufweist.
6. Containerverriegelung (1) nach einem Aspekte 4 oder 5,
   **dadurch gekennzeichnet**, **dass**
   der erste Verriegelungsmechanismus (10) eine Kulissenführung (14) umfasst, wobei der erste Betätigungshebel (13) einen Greifabschnitt (131) mit einem endseitigen Führungselement (132) aufweist, das in die Kulissenführung (14) eingreift, wobei die Kulissenführung (14) insbesondere einen zumindest im Wesentlichen parallel zur horizontalen Verriegelungsachse (H) ausgerichteten horizontalen Führungsnutabschnitt (140) aufweist.
7. Containerverriegelung (1) nach einem der vorherigen Aspekte, insbesondere nach Aspekt 6,
   **dadurch gekennzeichnet**, dass der erste Verriegelungsmechanismus (10) eine Kulissenführung (14) umfasst, die einen ersten vertikalen Führungsnutabschnitt (141) zur Festlegung der Öffnungsstellung des ersten Verriegelungselements (11) und einen zweiten vertikalen Führungsnutabschnitt (142) zur Festlegung der Verriegelungsstellung des ersten Verriegelungselements (11) aufweist, wobei insbesondere der erste vertikale Führungsnutabschnitt (141) und der zweite vertikale Führungsnutabschnitt (142) in einer Richtung parallel zur horizontalen Verriegelungsachse (H) voneinander beabstandet sind.
8. Containerverriegelung (1) nach einem der vorherigen Aspekte,
   **dadurch gekennzeichnet**, dass der erste Verriegelungsmechanismus (10) ein mit dem ersten Betätigungshebel (13) gekoppeltes Federelement (15) umfasst, das eine einer Verdrehbewegung des ersten Betätigungshebels (13) entgegenwirkende Rückstellkraft, insbesondere in vertikale Richtung nach unten, (13) auf den ersten Betätigungshebel (13) ausübt.
9. Containerverriegelung (1) nach einem der vorherigen Aspekte,
   **dadurch gekennzeichnet**, dass der zweite Verriegelungsmechanismus (20) einen um die vertikale Verriegelungsachse (V), vorzugsweise um zumindest ungefähr 90°, verdrehbaren zweiten Betätigungshebel (22) umfasst, der mit dem zweiten Verriegelungselement (21) verbunden ist, wobei der zweite Betätigungshebel (22) insbesondere mit einem in einer Drehlagerung (26) aufgenommenen Gleitlagerabschnitt (211) des zweiten Verriegelungselements (21) verbunden ist.
10. Containerverriegelung (1) nach einem der vorherigen Aspekte,
   **dadurch gekennzeichnet**, dass der zweite Verriegelungsmechanismus (20) ein mit dem zweiten Verriegelungselement (21) gekoppeltes Federelement (25), insbesondere ein Drehfederelement, umfasst, das insbesondere eine in eine Öffnungsstellung des zweiten Betätigungshebels (22) wirkende Rückstellkraft auf den zweiten Betätigungshebel (22) ausübt.
11. Containerverriegelung (1) nach einem der vorherigen Aspekte,
   **dadurch gekennzeichnet**, dass der erste Verriegelungsmechanismus (10) und der zweite Verriegelungsmechanismus (20) relativ zueinander unverschieblich angeordnet, insbesondere fest miteinander verbunden, sind, wobei der erste Verriegelungsmechanismus (10) und der zweite Verriegelungsmechanismus (20) insbesondere in einer Richtung, die senkrecht zur horizontalen Verriegelungsachse (H) und zur vertikalen Verriegelungsachse (V) verläuft, unverschieblich sind.
12. Frontausschub (3) eines Fahrgestells (100), insbesondere eines Sattelaufliegers, zur Aufnahme verschiedener Containertypen, **gekennzeichnet durch** mindestens eine Containerverriegelung (1) nach einem der Aspekte 1 bis 11.
13. Frontausschub (3) nach Aspekt 12,
   **dadurch gekennzeichnet**, dass die mindestens eine Containerverriegelung (1) in einen Querträger (30) des Frontausschubsintegriert ist, wobei der erste Verriegelungsmechanismus (10) und der zweite Verriegelungsmechanismus (20) insbesondere im Wesentlichen innerhalb des Querträgers (30), vorzugsweise relativ zueinander unverschieblich, aufgenommen sind.
14. Frontausschub (3) nach Aspekt 12 oder 13,
   **dadurch gekennzeichnet**, dass der Querträger (30) eine erste Durchgangsöffnung (35) für das erste Verriegelungselement (11), vorzugsweise in einem rückseitigen Stegabschnitt (33) des Querträgers (30), und/oder eine zweite Durchgangsöffnung (36) für das zweite Verriegelungselement (21), vorzugsweise in einem Obergurt (31) des Querträgers (30), aufweist.
15. Frontausschub (3) nach einem der Aspekte 12 bis 14,
   **dadurch gekennzeichnet**, dass zwischen einem Obergurt (31) und einem Untergurt (32) des Querträgers (30) eine koaxial zur ersten Durchgangsöffnung (35) ausgerichtete Axial-/Drehlagerung (12) zur Aufnahme eines Gleitlagerabschnitts (111) des ersten Verriegelungselements (11) angeordnet ist.
16. Frontausschub (3) nach einem der Aspekte 12 bis 15,
   **dadurch gekennzeichnet, dass**
   die Axial-/Drehlagerung (12) durch einen, insbesondere mit einem rückseitigen Stegabschnitt (33) des Querträgers (30) verschweißten, Rohrabschnitt (121) mit einer Längsausnehmung (122) gebildet ist.
17. Frontausschub (3) nach einem der Aspekte 12 bis 16,
   **dadurch gekennzeichnet**, dass zwischen einem Obergurt (31) und einem Untergurt (32) des Querträgers (30) ein Verbindungsblech (37) angeordnet ist, das, insbesondere an einer Oberseite, eine Führungskante (370) zur Führung des zweiten Betätigungshebels (22) aufweist, wobei die Führungskante (370) insbesondere eine erste Vertiefung (371) zur Festlegung der Öffnungsstellung des zweiten Verriegelungselements (21) und eine zweite Vertiefung (372) zur Festlegung der Verriegelungsstellung des zweiten Verriegelungselements (21) ausbildet.
18. Frontausschub (3) nach Aspekt 17,
   **dadurch gekennzeichnet**, dass das Verbindungsblech (37) einen im Wesentlichen senkrecht zur horizontalen Verriegelungsachse (H) angeordneten Blechabschnitt (373) aufweist, der mit einem frontseitigen Endbereich des Rohrabschnitts (121) verbunden, insbesondere verschweißt, ist.
19. Frontausschub (3) nach einem der Aspekte 12 bis 18,
   **dadurch gekennzeichnet**, dass die Kulissenführung (14) als eine Kulissenplatte mit einer Führungsnut ausgeführt ist, die insbesondere mit einem Längsstegabschnitt (38) des Querträgers (30) verbunden, insbesondere verschraubt, ist.
20. Frontausschub (3) nach einem der Aspekte 12 bis 19, insbesondere nach Aspekt 19,
   **dadurch gekennzeichnet**, dass ein Längsstegabschnitt (38) des Querträgers (30) eine Stegausnehmung (39) aufweist, in die ein Führungselement (132) des ersten Betätigungshebels (13) hineinragt.
21. Frontausschub (3) nach einem der Aspekte 12 bis 19, insbesondere nach Aspekt 20,
   **dadurch gekennzeichnet,** dass ein Federelement (15) jeweils mit dem Querträger (30), insbesondere mit dem Untergurt (32) des Querträgers (30), und dem Führungselement (132) des ersten Betätigungshebels (13) verbunden ist, insbesondere auf einer vom ersten Verriegelungselement (11) abgewandten Seite der Kulissenführung (14).
22. Frontausschub (3) nach einem der Aspekte 12 bis 21,
   **dadurch gekennzeichnet**, dass der erste Verriegelungsmechanismus (10) derart innerhalb des Querträgers (30) angeordnet ist, dass das erste Verriegelungselement (11) im Verriegelungszustand in eine äußere, insbesondere schräg zur horizontalen Verriegelungsrichtung (H) ausgerichtete, Aufnahmeöffnung eines Eckbeschlags eines Containers eingreift.
23. Fahrgestell (100), insbesondere Sattelauflieger, zur Aufnahme verschiedener Containertypen,
   **gekennzeichnet durch** mindestens eine Containerverriegelung (1) nach einem der Aspekte 1 bis 11 oder einen Frontausschub (3) nach einem der Aspekte 12 bis 22.
24. Verriegelungsanordnung umfassend einen Frontausschub (3) nach einem der Aspekte 12 bis 22, insbesondere mit mindestens einer Containerverriegelung (1) nach Aspekt 11, und einen Container, vorzugsweise 45-Fuß-Container, mit einem frontseitigen Eckbeschlag, der eine äußere, insbesondere schräg zur horizontalen Verriegelungsrichtung (H) ausgerichtete, Aufnahmeöffnung aufweist, wobei das erste Verriegelungselement (11) der Containerverriegelung (1) in die Aufnahmeöffnung eingreift.

Ausführungsbeispiele der Erfindung werden nachfolgend anhand der Zeichnungen näher erläutert. Hierbei zeigen:
- Figur 1a: eine schematische Darstellung einer Ausführungsform einer erfindungsgemäßen Containerverriegelung, die in einen Frontausschub integriert ist, in einer Öffnungsstellung der ersten und zweiten Verriegelungselemente;
- Figur 1b: eine schematische Darstellung der Ausführungsform nach Figur 1a in einer Verriegelungsstellung des zweiten Verriegelungselements;
- Figur 2: eine schematische Darstellung der Ausführungsform nach Figur 1a in einer perspektivischen Detailfrontansicht des ersten und zweiten Verriegelungsmechanismus;
- Figur 3: eine schematische Darstellung der Ausführungsform nach Figur 1a in einer perspektivischen Detailansicht des ersten Verriegelungsmechanismus;
- Figur 4: eine schematische Darstellung der Ausführungsform nach Figur 1a in einer perspektivischen Rückansicht;
- Figur 5: eine schematische Darstellung eines erfindungsgemäßen Fahrgestells mit einem Frontausschub mit erfindungsgemäßen Containerverriegelungen in einer perspektivischen Ansicht;
- Figur 6: eine schematische Darstellung einer erfindungsgemäßen Verriegelungsanordnung eines 45-Fuß-High-Cube Containers in einer perspektivischen Ansicht.

In der nachfolgenden Beschreibung der Erfindung werden für gleiche und gleich wirkende Elemente dieselben Bezugszeichen verwendet.

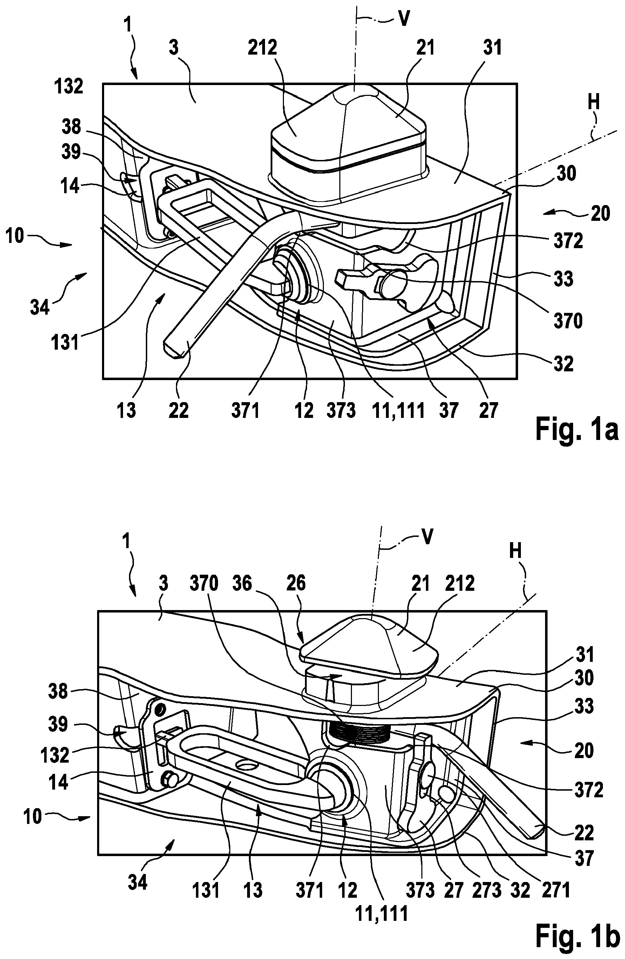

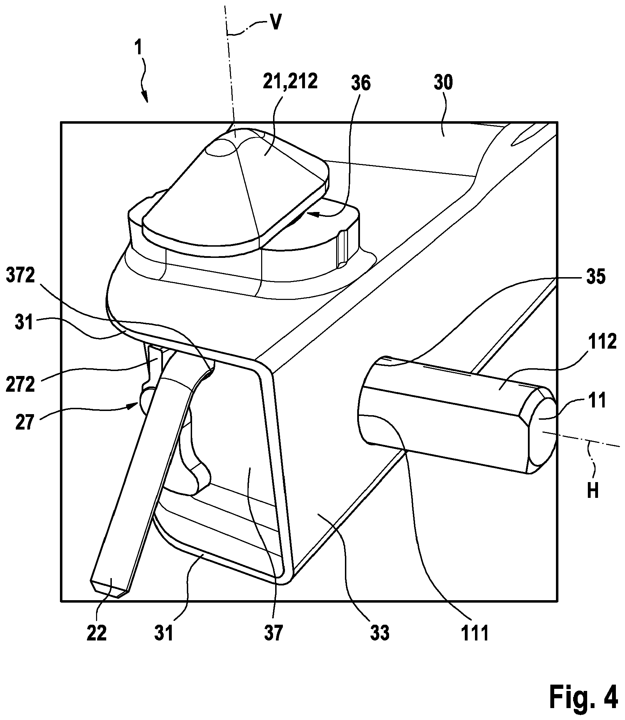

Die Figuren 1a und 1b zeigen eine Ausführungsform einer erfindungsgemäßen Containerverriegelung 1, die in einen Querträger 30 eines Frontausschubs 3 eines Sattelaufliegers integriert ist. Die Containerverriegelung 1 weist einen ersten Verriegelungsmechanismus 10 und einen zweiten Verriegelungsmechanismus 20 auf, die über einen ersten Betätigungshebel 13 bzw. einen zweiten Betätigungshebel 22 unabhängig voneinander betätigbar sind. Ein als Steckbolzen ausgeführtes erstes Verriegelungselement 11 (siehe Figur 4) ist entlang der horizontalen Verriegelungsachse H zwischen einer Öffnungsstellung und einer Verriegelungsstellung hin- und herbeweglich, nämlich axial verschieblich, um in eine seitliche korrespondierende Aufnahmeöffnung eines Eckbeschlags eines zu verriegelnden Containers (nicht dargestellt) eines ersten Containertyps (High-Cube-Container) eingreifen zu können. Der Steckbolzen ist beidseitig abgeflacht. Ein als Verriegelungskopf mit Drehbolzen ausgeführtes zweites Verriegelungselement 21 ist um die vertikale Verriegelungsachse V zwischen einer Öffnungsstellung und einer Verriegelungsstellung hin- und herbeweglich, nämlich verdrehbar, um in eine untere korrespondierende Aufnahmeöffnung eines Eckbeschlags eines zu verriegelnden Containers (nicht dargestellt) eines zweiten Containertyps (ISO-Container) eingreifen zu können.

Der Querträger 30 des Frontausschubs 3 ist als Stahlträger ausgeführt, der einen Obergurt 31, einen Untergurt 32 und einen den Obergurt 31 und den Untergurt 32 verbindenden rückseitigen vertikalen Stegabschnitt 33 aufweist. Der Obergurt 31, der Untergurt 32 und der Stegabschnitt 33 begrenzen einen inneren Aufnahmeraum 34 des Querträgers 30. Der Obergurt 31 weist eine Durchgangsöffnung 36 für einen Gleitlagerabschnitt 211 des zweiten Verriegelungselements 21 auf und bildet für diesen eine Drehlagerung 26. Der rückseitige Stegabschnitt 33 weist eine Durchgangsöffnung 35 für einen Gleitlagerabschnitt 111 des ersten Verriegelungselements 11 auf.

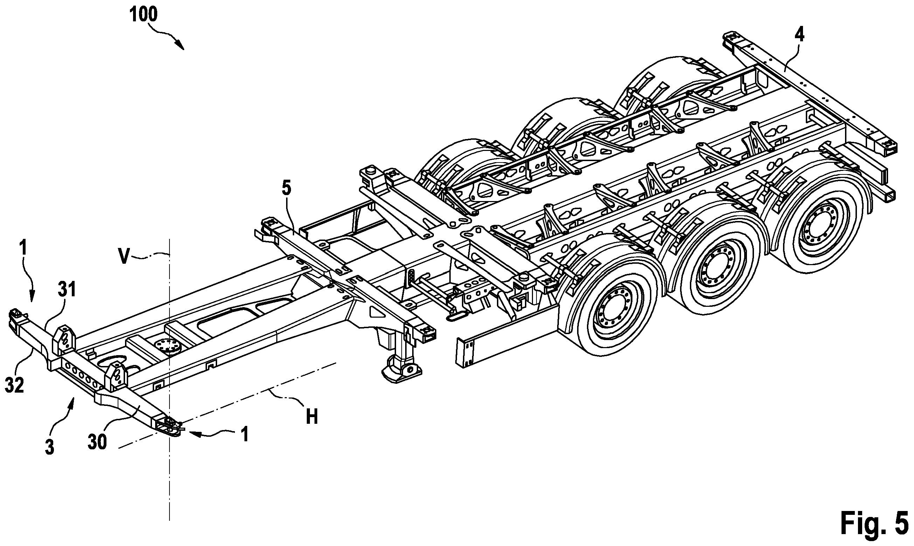

Der erste Verriegelungsmechanismus 10 ist in den Figuren 1a und 1b jeweils in einer Öffnungsstellung dargestellt, in der der erste Betätigungshebel 13 nach vorne gezogen ist. Der erste Betätigungshebel 13 weist dazu einen doppelstrebig ausgeführten Greifabschnitt 131 auf. In einer Verriegelungsstellung wäre der erste Betätigungshebel 13 nach hinten gedrückt und ein Verriegelungsabschnitt 112 des ersten Verriegelungselements 11 nach hinten aus dem Querträger 30 ausgeschoben (siehe Figur 4). Der zweite Verriegelungsmechanismus 20 ist in Figur 1a in einer Öffnungsstellung und in Figur 1b in einer Verriegelungsstellung dargestellt. Der Verriegelungsabschnitt 212 des zweiten Verriegelungselements 21 wird zwischen der Öffnung- und der Verriegelungsstellung um 90° verdreht, um eine formschlüssige Verbindung mit einem Eckbeschlag eines Containers herzustellen bzw. zu lösen. Der erste und zweite Verriegelungsmechanismus 10 bzw. 20 sind mechanisch voneinander entkoppelt, wodurch sie unabhängig voneinander manuell betätigbar sind. Der zweite Verriegelungsmechanismus 20 ist oberhalb des ersten Verriegelungsmechanismus 10 innerhalb des Querträgers 20 angeordnet. Die vertikale Verriegelungsachse V und die horizontale Verriegelungsachse H liegen in einer gemeinsamen Ebene, die vertikal und in Längsrichtung des Frontausschubs 3 bzw. des Fahrgestells 100 (siehe Figur 5) ausgerichtet ist. Dadurch resultiert eine schmale Bauform des Frontausschubs 3. Durch die Integration der Containerverriegelung 1 in den Querträger 30 kann auf ein separates Verriegelungsgehäuse verzichtet werden. Dadurch wird ein geringeres Gewicht des Frontausschubs 3 bzw. des Fahrgestells 100 erreicht.

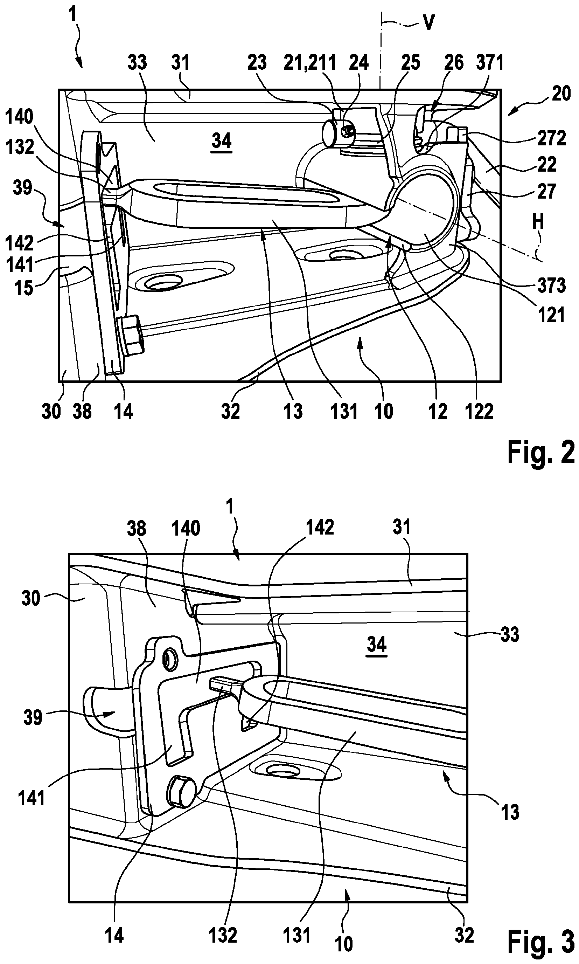

Das erste Verriegelungselement 11 weist einen Verriegelungsabschnitt 112 und einen Gleitlagerabschnitt 111 mit kreiszylinderförmigen Querschnitt auf, der in einer als Rohrabschnitt ausgeführten Axialführungsbuchse 121 axial verschieblich und verdrehbar gelagert ist. Eine ausreichend breite schlitzförmige Längsausnehmung 122 der Axialführungsbuchse 121 ermöglicht die Verschwenkung des ersten Betätigungshebels 13 um einen vorgegebenen Winkelbereich, beispielsweise um ca. 20°. Die Axialführungsbuchse 121 und die Längsausnehmung 122 bilden eine Axial-/Drehlagerung 12 für den ersten Betätigungshebel 13 bzw. das erste Verriegelungselement 11. Eine Kulissenführung 14 (siehe Figuren 2 und 3) ist als eine Metallplatte mit einer Führungsnut ausgeführt, die an einen Längsstegabschnitt 38 angeschraubt ist.

Der Längsstegabschnitt 38 hat eine Stegausnehmung 39, die eine Durchgangsverbindung zwischen dem Hohlraum des Querträgers 30 und dem nach vorne offenen Aufnahmeraum 34 herstellt. Die Kulissenführung 14 weist einen horizontalen Führungsnutabschnitt 140 auf, entlang dem ein als Fortsatz des ersten Betätigungshebels 13 ausgeführtes Führungselement 132 in Richtung der horizontalen Verriegelungsachse H geführt wird. Die an den beiden Enden des horizontalen Führungsnutabschnitts 140 vorgesehenen ersten bzw. zweiten vertikalen Führungsnutabschnitte 141 bzw. 142 bilden Vertiefungen, um die Öffnung- bzw. Verriegelungsstellung des Betätigungshebels 13 bzw. des ersten Verriegelungselements 11 festzulegen. Zur Verriegelung eines Containers wird der erste Betätigungshebel 13 aus einer Öffnungsstellung aus dem ersten vertikalen Führungsnutabschnitt 141 angehoben, entlang des horizontalen Führungsnutabschnitt 140 nach hinten gedrückt und in den zweiten vertikalen Führungsnutabschnitt 142 in eine Verriegelungsstellung nach unten abgelegt. Für eine Entriegelung eines Containers wird die Bewegung umgekehrt ausgeführt. Der erste Betätigungshebel 13 fungiert insofern als Drehhebel und Zieh-/Drückgriff zur Betätigung des ersten Verriegelungsmechanismus 10. Auf der Rückseite der Kulissenführung 14 ist ein Federelement 15 (nicht dargestellt) angeordnet, das den ersten Betätigungshebel 13 leicht nach unten zieht, um eine versehentliche Verdrehung des ersten Betätigungshebels 13 nach oben zu verhindern.

Das zweite Verriegelungselement 21 weist einen als Verriegelungskopf ausgeführten Verriegelungsabschnitt 212 und einen darunter angeordneten Gleitlagerabschnitt 211 mit kreiszylinderförmigem Querschnitt auf. Der Gleitlagerabschnitt 211 ist in der als Gleitlager ausgeführten Drehlagerung 26, die durch die Durchgangsöffnung 36 im Obergurt 31 bzw. durch den darauf angeordneten Auflageansatz für den Container gebildet wird, drehbar gelagert. Das zwischen dem Obergurt 31 und dem Untergurt 32 eingeschweißte Verbindungsblech 37 bildet an einem freien Abschnitt seiner Oberseite eine Führungskante 370 für den zweiten Betätigungshebel 22 aus. Der zweite Betätigungshebel 22 gleitet mit seinem Querabschnitt 23 bei Verdrehung des zweiten Betätigungshebels 22 zwischen einer ersten Vertiefung 371 und einer ersten Vertiefung 372 an der Führungskante 370 entlang. Die Führungskante 370 verläuft über Eck. Die erste und zweite Vertiefung 371 bzw. 372 der Führungskante 370 legen eine Öffnungs- bzw. Verriegelungsstellung des zweiten Betätigungshebels 22 und des damit starr verbundenen zweiten Verriegelungselements 21 fest. Der zweite Betätigungshebel 22 ist über den Querabschnitt 23 und den Sicherungsstift 24 an der Unterseite des Gleitlagerabschnitts 211 mit dem zweiten Verriegelungselement 21 verbunden. Ein als Drehfeder ausgeführtes Federelement 25 übt eine einer Verdrehbewegung entgegenwirkende Rückstellkraft auf das zweite Verriegelungselement 21 bzw. den zweiten Betätigungshebel 22 aus. Der Blechabschnitt 373 des Verbindungsblech 37 ist mit einem Ende der Axialführungsbuchse 121 versschweißt. Über eine Sicherungsvorrichtung 27 mit einem um einen Profilbolzen 271 verschwenkbaren Blockierhebel 272 ist der zweite Betätigungshebel 22 in der der Verriegelungsstellung zugeordneten zweiten Vertiefung 372 festlegt bzw. arretierbar. Der Profilbolzen 271 ist z.B. als Vierkant ausgeführt. Der Blockierhebel 272 weist eine dem Querschnitt des Profilbolzens 271 entsprechende und einseitig kreisförmig erweiterte Durchgangsöffnung 273 auf.

Figur 5 zeigt ein als Sattelauflieger ausgeführtes Fahrgestell 100 mit einem erfindungsgemäßen Frontausschub 3, in den beidseitig eine erfindungsgemäße Containerverriegelung 1 integriert ist, die im Zusammenhang mit den Figuren 1a bis 4 beschrieben ist. Zusätzlich zum Frontausschub 3 ist ein Mittelausschub 5 und ein Heckausschub 4 vorgesehen, um das Fahrgestell 100 für verschiedene Containertypen mit unterschiedlichen Containerlängen anzupassen. Eine Containerverriegelung 1 weist wenige Bauteile auf, ist kostengünstig herstellbar und einfach zu bedienen.

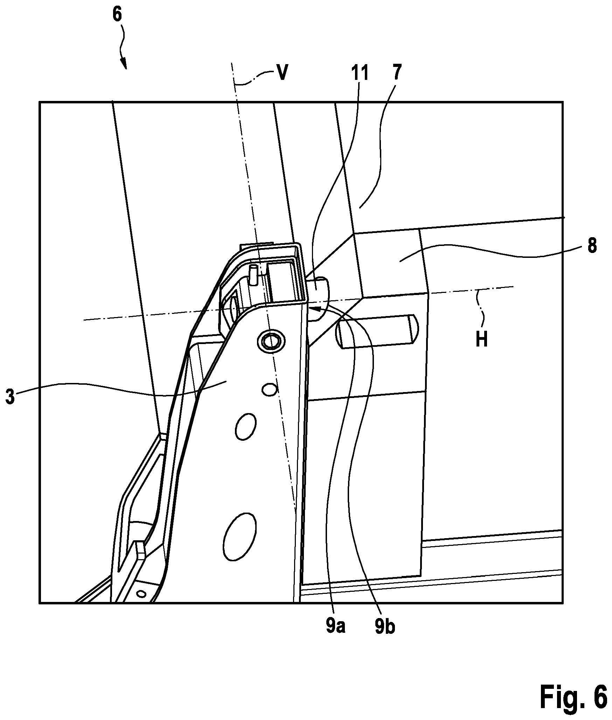

Figur 6 zeigt eine erfindungsgemäße Verriegelungsanordnung 6 aus einem zuvor beschriebenen Frontausschub 3 und einem 45-Fuß-High-Cube (HC) Container 7 (gemäß ISO 668 und ISO 1496), der einen frontseitigen Eckbeschlag 8 mit einer inneren Aufnahmeöffnung 9a und einer äußeren Aufnahmeöffnung 9b aufweist. Die innere Aufnahmeöffnung 9a ist in Richtung der horizontalen Verriegelungsrichtung H ausgerichtet, während die äußere Aufnahmeöffnung 9b schräg dazu nach außen zeigend ausgerichtet ist. Das erste Verriegelungselement 11 des ersten Verriegelungsmechanismus 10 der Containerverriegelung 1 greift in die äußere Aufnahmeöffnung 9b ein, um den Container 7 zu verriegeln. Der erste Verriegelungsmechanismus 10 ist unverschieblich gegenüber dem zweiten Verriegelungsmechanismus 20 ausgeführt. Das erste Verriegelungselement 11 ist in Längsrichtung des Frontausschubs 3, d.h. senkrecht zur horizontalen Verriegelungsrichtung H und vertikalen Verriegelungsrichtung V, unverschieblich an einer festen Position angeordnet, um sowohl High Cube (HC) Container der Länge 40 Fuß als auch der Länge 45 Fuß an jeweils korrespondierenden Aufnahmeöffnungen der jeweiligen Eckbeschläge der Container verriegeln zu können. Die Containerverriegelung 1 bzw. der Frontausschub 3 kann dadurch konstruktiv einfacher ausgeführt werden, wobei bei einer Anordnung des 45-Fuß Containers auf einem Fahrgestell 100 weiter hinten als im Stand der Technik üblich, z.B. 15 cm weiter hinten bei Ausnutzung einer vorgeschriebenen maximalen Gesamtlänge von 12,15 m, der erforderliche Durchschwenkradius trotz der Verriegelung des Containers 7 an den weiter außen sitzenden äußeren Aufnahmeöffnungen 9b eingehalten wird.

### Bezugszeichenliste:

- 1: Containerverriegelung
- 3: Frontausschub
- 4: Heckausschub
- 5: Mittelausschub
- 6: Verriegelungsanordnung
- 7: Container
- 8: Eckbeschlag
- 9a: innere Aufnahmeöffnung
- 9b: äußere Aufnahmeöffnung
- 10: erster Verriegelungsmechanismus
- 11: erstes Verriegelungselement
- 12: Axial-/Drehlagerung
- 13: erster Betätigungshebel
- 14: Kulissenführung
- 15: Federelement
- 20: zweiter Verriegelungsmechanismus
- 21: zweites Verriegelungselement
- 22: zweiter Betätigungshebel
- 23: Querabschnitt
- 24: Sicherungsstift
- 25: Federelement
- 26: Drehlagerung
- 27: Sicherungs/Blockiervorrichtung
- 30: Querträger
- 31: Obergurt
- 32: Untergurt
- 33: Stegabschnitt
- 34: Aufnahmeraum
- 35: Durchgangsöffnung
- 36: Durchgangsöffnung
- 37: Verbindungsblech
- 38: Längsstegabschnitt
- 39: Stegausnehmung
- 100: Fahrgestell
- 111: Gleitlagerabschnitt
- 112: Verriegelungsabschnitt
- 121: Axialführungsbuchse
- 122: Längsausnehmung
- 131: Greifabschnitt
- 132: Führungselement
- 140: horizontaler Führungsnutabschnitt
- 141: erster vertikaler Führungsnutabschnitt
- 142: zweiter vertikaler Führungsnutabschnitt
- 211: Gleitlagerabschnitt
- 212: Verriegelungsabschnitt
- 271: Profilbolzen
- 272: Blokierhebel
- 273: Durchgangsöffnung
- 370: Führungskante
- 371: erste Vertiefung
- 372: zweite Vertiefung
- 373: Blechabschnitt
- H: horizontale Verriegelungsachse
- V: vertikale Verriegelungsachse

## Patentansprüche

1. Containerverriegelung (1) zur Verriegelung verschiedener Containertypen auf einem Fahrgestell (100), insbesondere für einen Frontausschub (3) des Fahrgestells (100), umfassend
- einen ersten Verriegelungsmechanismus (10), der dazu ausgebildet ist, ein erstes Verriegelungselement (11) entlang einer horizontalen Verriegelungsachse (H) zwischen einer Öffnungsstellung und einer Verriegelungsstellung hin- und herzubewegen,
- einen zweiten Verriegelungsmechanismus (20), der dazu ausgebildet ist, ein zweites Verriegelungselement (21) um eine vertikale Verriegelungsachse (V) zwischen einer Öffnungsstellung und einer Verriegelungsstellung hin- und herzubewegen,
**dadurch gekennzeichnet, dass** der erste Verriegelungsmechanismus (10) und der zweite Verriegelungsmechanismus (20) unabhängig voneinander betätigbar sind.

2. Containerverriegelung (1) nach Anspruch 1,
**dadurch gekennzeichnet, dass** das erste Verriegelungselement (11) über einen ersten Betätigungshebel (13) entlang der horizontalen Verriegelungsachse (H) axial verschieblich ist und/oder das zweite Verriegelungselement (21) über einen zweiten Betätigungshebel (22) um die vertikale Verriegelungsachse (V) verdrehbar ist.

3. Containerverriegelung (1) nach Anspruch 1 oder 2,
**dadurch gekennzeichnet, dass** der erste Verriegelungsmechanismus (10) oberhalb des zweiten Verriegelungsmechanismus (20) angeordnet ist, wobei insbesondere die horizontale Verriegelungsachse (H) und die vertikale Verriegelungsachse (V) zumindest im Wesentlichen in einer Ebene liegen.

4. Containerverriegelung (1) nach einem der vorherigen Ansprüche,
**dadurch gekennzeichnet, dass** der erste Verriegelungsmechanismus (10) einen entlang der horizontalen Verriegelungsachse (H) axial verschieblich gelagerten ersten Betätigungshebel (13) umfasst, der mit dem ersten Verriegelungselement (11) verbunden ist.

5. Containerverriegelung (1) nach einem der vorherigen Ansprüche,
**dadurch gekennzeichnet, dass** der erste Verriegelungsmechanismus (10) einen ersten Betätigungshebel (13) umfasst, der in einer Axial-/Drehlagerung (12) entlang der horizontalen Verriegelungsachse (H) axial verschieblich und um die horizontale Verriegelungsachse (H) verdrehbar gelagert ist, wobei das erste Verriegelungselement (11) insbesondere einen in der Axial-/Drehlagerung (12) aufgenommen Gleitlagerabschnitt (111) aufweist.

6. Containerverriegelung (1) nach einem Ansprüche 4 oder 5,
**dadurch gekennzeichnet, dass**
der erste Verriegelungsmechanismus (10) eine Kulissenführung (14) umfasst, wobei der erste Betätigungshebel (13) einen Greifabschnitt (131) mit einem endseitigen Führungselement (132) aufweist, das in die Kulissenführung (14) eingreift, wobei die Kulissenführung (14) insbesondere einen zumindest im Wesentlichen parallel zur horizontalen Verriegelungsachse (H) ausgerichteten horizontalen Führungsnutabschnitt (140) aufweist.

7. Containerverriegelung (1) nach einem der vorherigen Ansprüche, insbesondere nach Anspruch 6,
**dadurch gekennzeichnet, dass** der erste Verriegelungsmechanismus (10) eine Kulissenführung (14) umfasst, die einen ersten vertikalen Führungsnutabschnitt (141) zur Festlegung der Öffnungsstellung des ersten Verriegelungselements (11) und einen zweiten vertikalen Führungsnutabschnitt (142) zur Festlegung der Verriegelungsstellung des ersten Verriegelungselements (11) aufweist, wobei insbesondere der erste vertikale Führungsnutabschnitt (141) und der zweite vertikale Führungsnutabschnitt (142) in einer Richtung parallel zur horizontalen Verriegelungsachse (H) voneinander beabstandet sind.

8. Containerverriegelung (1) nach einem der vorherigen Ansprüche,
**dadurch gekennzeichnet, dass** der zweite Verriegelungsmechanismus (20) einen um die vertikale Verriegelungsachse (V), vorzugsweise um zumindest ungefähr 90°, verdrehbaren zweiten Betätigungshebel (22) umfasst, der mit dem zweiten Verriegelungselement (21) verbunden ist, wobei der zweite Betätigungshebel (22) insbesondere mit einem in einer Drehlagerung (26) aufgenommenen Gleitlagerabschnitt (211) des zweiten Verriegelungselements (21) verbunden ist.

9. Containerverriegelung (1) nach einem der vorherigen Ansprüche,
**dadurch gekennzeichnet, dass** der erste Verriegelungsmechanismus (10) und der zweite Verriegelungsmechanismus (20) relativ zueinander unverschieblich angeordnet, insbesondere fest miteinander verbunden, sind, wobei der erste Verriegelungsmechanismus (10) und der zweite Verriegelungsmechanismus (20) insbesondere in einer Richtung, die senkrecht zur horizontalen Verriegelungsachse (H) und zur vertikalen Verriegelungsachse (V) verläuft, unverschieblich sind.

10. Frontausschub (3) eines Fahrgestells (100), insbesondere eines Sattelaufliegers, zur Aufnahme verschiedener Containertypen,
**gekennzeichnet durch** mindestens eine Containerverriegelung (1) nach einem der Ansprüche 1 bis 9.

11. Frontausschub (3) nach Anspruch 10,
**dadurch gekennzeichnet, dass** die mindestens eine Containerverriegelung (1) in einen Querträger (30) des Frontausschubs integriert ist, wobei der erste Verriegelungsmechanismus (10) und der zweite Verriegelungsmechanismus (20) insbesondere im Wesentlichen innerhalb des Querträgers (30), vorzugsweise relativ zueinander unverschieblich, aufgenommen sind.

12. Frontausschub (3) nach Anspruch 10 oder 11,
**dadurch gekennzeichnet, dass** der Querträger (30) eine erste Durchgangsöffnung (35) für das erste Verriegelungselement (11), vorzugsweise in einem rückseitigen Stegabschnitt (33) des Querträgers (30), und/oder eine zweite Durchgangsöffnung (36) für das zweite Verriegelungselement (21), vorzugsweise in einem Obergurt (31) des Querträgers (30), aufweist.

13. Frontausschub (3) nach einem der Ansprüche 10 bis 12,
**dadurch gekennzeichnet, dass** zwischen einem Obergurt (31) und einem Untergurt (32) des Querträgers (30) eine koaxial zur ersten Durchgangsöffnung (35) ausgerichtete Axial-/Drehlagerung (12) zur Aufnahme eines Gleitlagerabschnitts (111) des ersten Verriegelungselements (11) angeordnet ist.

14. Frontausschub (3) nach einem der Ansprüche 10 bis 13,
**dadurch gekennzeichnet, dass** der erste Verriegelungsmechanismus (10) derart innerhalb des Querträgers (30) angeordnet ist, dass das erste Verriegelungselement (11) im Verriegelungszustand in eine äußere, insbesondere schräg zur horizontalen Verriegelungsrichtung (H) ausgerichtete, Aufnahmeöffnung eines Eckbeschlags eines Containers eingreift.

15. Verriegelungsanordnung umfassend einen Frontausschub (3) nach einem der Ansprüche 10 bis 14, insbesondere mit mindestens einer Containerverriegelung (1) nach Anspruch 9, und einen Container, vorzugsweise 45-Fuß-Container, mit einem frontseitigen Eckbeschlag, der eine äußere, insbesondere schräg zur horizontalen Verriegelungsrichtung (H) ausgerichtete, Aufnahmeöffnung aufweist, wobei das erste Verriegelungselement (11) der Containerverriegelung (1) in die Aufnahmeöffnung eingreift.
